(19) Europäisches Patentamt
European Patent Office
Office européen des brevets

(11) EP 1 357 795 B1

(12) EUROPÄISCHE PATENTSCHRIFT

(45) Veröffentlichungstag und Bekanntmachung des Hinweises auf die Patenterteilung:
**27.07.2005 Patentblatt 2005/30**

(21) Anmeldenummer: **02715423.6**

(22) Anmeldetag: **14.01.2002**

(51) Int Cl.7: **A01N 57/20**
// (A01N57/20, 43:90), A01N43:82

(86) Internationale Anmeldenummer:
**PCT/EP2002/000261**

(87) Internationale Veröffentlichungsnummer:
**WO 2002/058472 (01.08.2002 Gazette 2002/31)**

(54) **HERBIZIDE WIRKSTOFFKOMBINATIONEN**

HERBICIDAL ACTIVE INGREDIENT COMBINATIONS

COMBINAISONS D'AGENTS ACTIFS HERBICIDES

(84) Benannte Vertragsstaaten:
**AT BE CH CY DE DK ES FI FR GB GR IE IT LI LU MC NL PT SE TR**

(30) Priorität: **26.01.2001 DE 10103419**

(43) Veröffentlichungstag der Anmeldung:
**05.11.2003 Patentblatt 2003/45**

(73) Patentinhaber: **Bayer CropScience AG
40789 Monheim (DE)**

(72) Erfinder:
- **KILIAN, Michael
51379 Leverkusen (DE)**
- **BRINKMANN, Robert
51399 Burscheid (DE)**
- **PONTZEN, Rolf
42799 Leichlingen (DE)**

(56) Entgegenhaltungen:
**DE-A- 19 546 751 DE-A- 19 836 737**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 357 795 B1

Printed by Jouve, 75001 PARIS (FR)

## Beschreibung

Die vorliegende Erfindung betrifft neue Wirkstoffkombinationen, die aus den bekannten herbiziden Wirkstoffen Flufenacet, Metosulam und Glyphosate bestehen und sehr gut zur Unkrautbekämpfung geeignet sind.

Es ist bereits bekannt, dass N-(4-Fluorphenyl)-N-(isopropyl)-2-(5-trifluormethyl-1,3,4-thiadiazol-2-yl-oxy)-acetamid (= Flufenacet), N-(2,6-Dichlor-3-methylphenyl)-5,7-dimethoxy-[1,2,4]-triazolo[1,5a]-pyrimidin-2-sulfonamid (= Metosulam) und N-Phosphonomethylglycin (= Glyphosate) herbizide Eigenschaften besitzen (vgl. EP-A 0 348 737 und "The Pesticide Manual" 11th. Edition, British Crop Protection Council 1997, Seiten 836 bis 838 und 646 bis 649).

Weiterhin ist schon bekannt, dass Mischungen aus Flufenacet und Metosulam zur Bekämpfung von Unkraut eingesetzt werden können (vgl. DE-A 195 46 751). Schließlich wurde auch bereits beschrieben, dass Kombinationen aus Flufenacet und Glyphosate bzw. dessen Salzen als selektive herbizide Mittel in Sojakulturen, die gegen diese Wirkstoffe resistent sind, eingesetzt werden können (vgl. WO 00-08934). Sowohl die Wirksamkeit der einzelnen Komponenten als auch der bekannten Mischungen aus jeweils zwei Wirkstoffen ist gut. Bei sehr niedrigen Aufwandmengen lässt die herbizide Potenz allerdings in manchen Fällen zu wünschen übrig.

Es wurde nun gefunden, dass die neuen Wirkstoffkombinationen aus

A) N-(4-Fluor-phenyl)-N-(iso-propyl)-2-(5-trifluormethyl-1,3,4-thiadiazol-2-yl-oxy)-acetamid der Formel

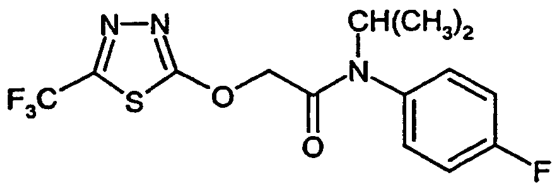

(I)

(Flufenacet)

und

B) N-(2,6-Dichlor-3-methyl-phenyl)-5,7-dimethoxy-[1,2,4]-triazolo[1,5a]pyrimidin-2-sulfonamid der Formel

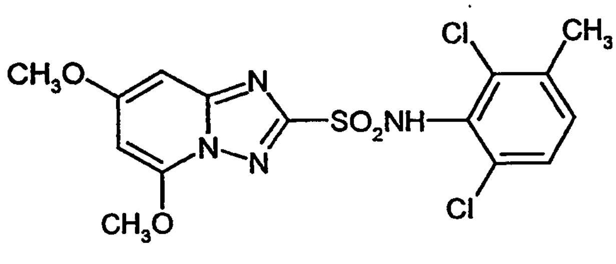

(II)

(Metosulam)

und

C) N-Phosphonomethyl-glycin der Formel

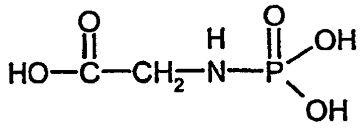

(III)

(Glyphosate)

bzw. deren Salzen,

sehr gut zur Bekämpfung von Unkraut geeignet sind.

Überraschenderweise ist die Wirksamkeit der erfindungsgemäßen Kombinationen aus drei Wirkstoffen beim Einsatz gegen Unkräuter wesentlich höher als die Wirkungen der einzelnen Komponenten bzw. die Wirkungen der vorbekannten Mischungen aus jeweils zwei Wirkstoffen. Es liegt also ein nicht vorhersehbarer, echter synergistischer Effekt vor und nicht nur eine Wirkungsergänzung.

Wie bereits oben erwähnt, sind die Wirkstoffe der Formeln (I), (II) und (III) und deren Einsatz als Herbizide bereits bekannt.

Unter Salzen des Glyphosates sind im vorliegenden Fall vorzugsweise dessen

- Alkalimetallsalze,
- Ammoniumsalze,
- Aminsalze sowie
- Trimethylsulfoniumsalze

zur verstehen. Besonders bevorzugt sind

- das Glyphosate-Natriumsalz,
- das Glyphosate-Ammoniumsalz,
- das Glyphosate-Monoisopropylammoniumsalz und
- das Glyphosate-Trimethylsulfoniumsalz.

Die Salze des Glyphosates und deren Einsatz als Herbizide sind ebenfalls bekannt (vgl. "The Pesticide Manual" $11^{th}$. Edition, British Crop Protection Council 1997, Seiten 646 bis 649).

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I) 0,01 bis 0,2 Gewichtsteile, vorzugsweise 0,02 bis 0,1 Gewichtsteile an Wirkstoff der Formel (II) und 0,5 bis 10 Gewichtsteile, vorzugsweise 1 bis 5 Gewichtsteile an Wirkstoff der Formel (III).

Die erfindungsgemäßen Wirkstoffkombinationen besitzen sehr gute herbizide Eigenschaften und lassen sich zur Bekämpfung von Unkräutern verwenden. Unter Unkräutern sind hierbei alle Pflanzen zu verstehen, die an Orten wachsen, wo sie unerwünscht sind.

Die erfindungsgemäßen Wirkstoffkombinationen können z.B. bei den folgenden Pflanzen verwendet werden:

<u>Dikotyle Unkräuter der Gattungen:</u> Cassia, Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Sphenoclea, Taraxacum, Plantago, Epilobium, Rubus.

<u>Monokotyle Unkräuter der Gattungen:</u> Echinochloa, Eriochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Dactyloctenium, Agrostis, Alopecurus, Apera, Aegilops, Phalaris.

Bevorzugt lassen sich die erfindungsgemäßen Wirkstoffkombinationen als Totalherbizide zur Bekämpfung von Unkräutern einsetzen, z.B. auf Wegen, Plätzen, Gleisanlagen usw.. Die erfindungsgemäßen Wirkstoffkombinationen zeichnen sich durch eine besonders schnell einsetzende und lange anhaltende Wirkung aus.

Die Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol,

Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser. Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffkombination, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäßen Wirkstoffkombinationen können vor allem nach dem Auflaufen der Pflanzen appliziert werden, also im Nachauflauf-Verfahren.

Die Aufwandmengen der erfindungsgemäßen Wirkstoffkombinationen können in einem gewissen Bereich variiert werden; sie hängen u.a. vom Wetter und von den Bodenfaktoren ab. Im allgemeinen liegen die Aufwandmengen zwischen 10 g und 15 kg pro ha, vorzugsweise zwischen 50 g und 10 kg pro ha, besonders bevorzugt zwischen 100 g und 5 kg pro ha.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination von zwei oder drei Herbiziden kann wie folgt berechnet werden (vgl. COLBY, S.R: "Calculating synergistic and antagonistic responses of herbicide combinations", Weeds 15, Seiten 20 - 22, 1967):
Wenn

X = % Schädigung durch Herbizid A (Wirkstoff der Formel I) bei $\underline{m}$ kg/ha Aufwandmenge,
Y = % Schädigung durch Herbizid B (Wirkstoff der Formel II) bei $\underline{n}$ kg/ha Aufwandmenge,
Z = % Schädigung durch Herbizid C (Wirkstoff der Formel (III)) bei $\underline{r}$ kg/ha Aufwandmenge,
$E_1$ = die erwartete Schädigung durch die Herbizide A und B bei Aufwandmengen von $\underline{m}$ und $\underline{n}$ kg/ha und
$E_2$ = die erwartete Schädigung durch die Herbizide A und B und C bei Aufwandmengen von $\underline{m}$ und $\underline{n}$ und $\underline{r}$ kg/ha bedeutet,

dann ist für eine Kombination

$$E_1 = X + Y - \frac{X \times Y}{10}$$

und für eine Kombination aus 3 Wirkstoffen:

$$E_2 = X + Y + Z - \frac{(X \times Y - X \times Z - Y \times Z)}{100} + \frac{X \times Y \times Z}{10000}$$

Ist die tatsächliche Schädigung größer als berechnet, so ist die Kombination in ihrer Wirkung überadditiv, d. h., sie zeigt einen synergistischen Effekt. In diesem Fall muss die tatsächlich beobachtete Schädigung größer sein als die aus den oben angeführten Formeln errechneten Werte für erwarteten Schädigungen $E_1$ bzw. $E_2$.
Die Erfindung wird durch die folgenden Beispiele veranschaulicht.

## Anwendungsbeispiele:

Es wurden handelsübliche Formulierungen der involvierten Wirkstoffe benutzt. Die für die Versuche benötigten Wirkstoffkonzentrationen wurden durch Verdünnen mit Wasser hergestellt.

## Beispiel A

### Post-emergence-Test

Mit der Wirkstoffzubereitung bespritzt man Testpflanzen, welche eine Höhe von 5 bis 25 cm haben so, daß die jeweils gewünschten Wirkstoffmengen pro Flächeneinheit ausgebracht werden. Die Konzentration der Spritzbrühe wird so gewählt, daß in 5001 Wasser/ha die jeweils gewünschten Wirkstoffmengen ausgebracht werden.
Nach 1-3 Monaten wird der Schädigungsgrad der Pflanzen bonitiert in % Schädigung im Vergleich zur Entwicklung der unbehandelten Kontrolle.
Es bedeuten:

0% = keine Wirkung (wie unbehandelte Kontrolle)
100% = totale Vernichtung

Wirkstoffe, Aufwandmengen, Auswertungszeitpunkte, Testpflanzen und Resultate gehen aus der nachfolgenden Tabelle hervor, wobei die in der Tabelle verwendeten Abkürzungen folgende Bedeutung haben:

(I) Flufenacet (N-(4-Fluor-phenyl)-N-(iso-propyl)-2-(5-trifluormethyl-1,3,4-thiadiazol-2-yl-oxy)-acetamid)

(II) Metosulam (N-(2,6-Dichlor-3-methyl-phenyl)-5,7-dimethoxy-[1,2,4]-triazolo-[1,5a]pyrimidin-2-sulfonamid)

(III-1) Glyphosat-isopropylammonium (N-Phosphonomethyl-glycin-isopropylammoniumsalz)

( ) In Klammern stehen gegebenenfalls die nach der oben angegebenen Formel nach Colby berechneten Werte.

**Tabelle A:** Post emergence-Test

| Wirkstoff(e) | Aufwand-menge (kg ai./ha) | Urtica urens 115 TnB | Potentilla anserina 41 TnB | Epilobium Spp. 55 TnB | Chamaenerion angustifolium 77 TnB |
|---|---|---|---|---|---|
| **Bekannt:** (III-1) | 1,8 | 0 | 0 | 35 | 35 |
| (I) + (III-1) | 0,6 + 1,8 | 0 | 00 | 30 | 58 |
| **Erfindungsgemäß:** (I) + (II) + (III-1) | 0,6 + 0,025 + 1,8 | 77 | 73 | 65 | 80 |

TnB = Tage nach Behandlung

ai = Wirkstoff

**Patentansprüche**

1. Herbizide Mittel, **gekennzeichnet durch** einen Gehalt an einer Wirkstoffkombination, bestehend aus

A) N-(4-Fluor-phenyl)-N-(iso-propyl)-2-(5-trifluormethyl-1,3,4-thiadiazol-2-yl-oxy)-acetamid der Formel

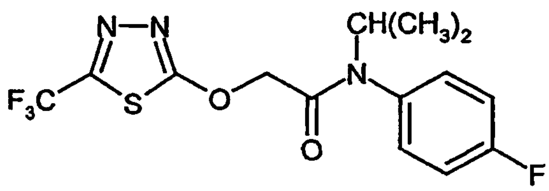

(I)

(Flufenacet)

und

B) N-(2,6-Dichlor-3-methyl-phenyl)-5,7-dimethoxy-[1,2,4]-triazolo-[1,5a]pyrimidin-2-sulfonamid der Formel

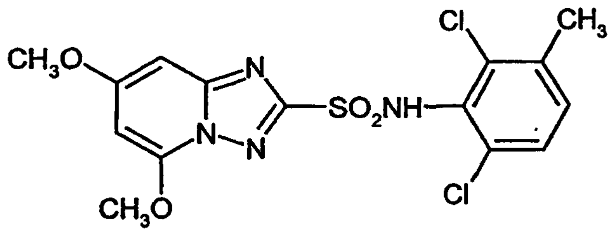

(II)

(Metosulam)

und

C) N-Phosphonomethyl-glycin der Formel

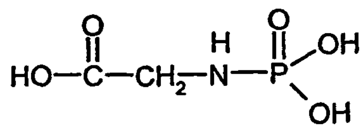

(III)

(Glyphosate)

bzw. deren Salzen,
sowie **durch** einen Gehalt an Streckmitteln und/oder oberflächenaktiven Stoffen.

2. Mittel gemäß Anspruch 1, **dadurch gekennzeichnet, daß** in den Wirkstoffkombinationen das Gewichtsverhältnis von Wirkstoff der Formel (I) zu Wirkstoff der Formel (II) zwischen 1:0,01 und 1:0,2 und zu Wirkstoff der Formel (III) zwischen 1:0,5 und 1:10 liegt.

3. Verfahren zur Bekämpfung von Unkräutern, **dadurch gekennzeichnet, daß** man Wirkstoffkombinationen gemäß Anspruch 1 auf die Unkräuter und/oder deren Lebensraum ausbringt.

4. Verwendung von Wirkstoffkombinationen gemäß Anspruch 1 zur Bekämpfung von Unkräutern.

5. Verfahren zur Herstellung von herbiziden Mitteln, **dadurch gekennzeichnet, daß** man Wirkstoffkombinationen gemäß Anspruch 1 mit Streckrnitteln und/oder oberflächenaktiven Stoffen vermischt.

## Claims

1. Herbicidal compositions, **characterized in that** they comprise an active compound combination consisting of

A) N-(4-fluorophenyl)-N-(isopropyl)-2-(5-trifluoromethyl-1,3,4-thiadiazol-2-yloxy)acetamide of the formula

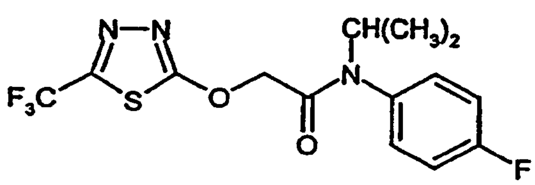

(I)

(flufenacet)

and

B) N-(2,6-dichloro-3-methylphenyl)-5,7-dimethoxy-[1,2,4]-triazolo-[1,5a]pyrimidine-2-sulphonamide of the formula

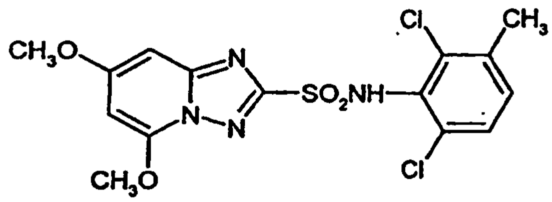

(II)

(metosulam)

and

C) N-phosphonomethylglycine of the formula

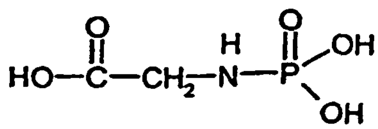

(III)

(glyphosate)

and/or salts thereof,
and also extenders and/or surfactants.

2. Compositions according to Claim 1, **characterized in that** in the active compound combinations the weight ratio of active compound of the formula (I) to active compound of the formula (II) is from 1:0.01 to 1:0.2 and to active compound of the formula (III) is from 1:0.5 to 1:10.

3. Method for controlling weeds, **characterized in that** active compound combinations according to Claim 1 are applied to the weeds and/or their habitats.

4. Use of active compound combinations according to Claim 1 for controlling weeds.

5. Process for preparing herbicidal compositions, **characterized in that** active compound combinations according to Claim 1 are mixed with extenders and/or surfactants.

**Revendications**

1. Compositions herbicides, **caractérisées par** une teneur en une combinaison de substances actives, constituées de

A) N- (4-fluorophényl)-N-(isopropyl)-2-(5-trifluorométhyl-1,3,4-thiadiazole-2-yl-oxy)-acétamide de formule

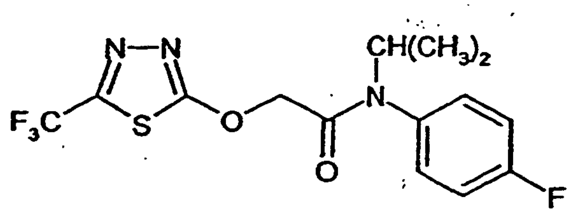

(I)

(flufénacet)

et

B) N-(2,6-dichloro-3-méthylphényl)-5,7-diméthoxy-[1,2,4]-triazolo-[1,5a]pyrimidine-2-sulfonamide de formule

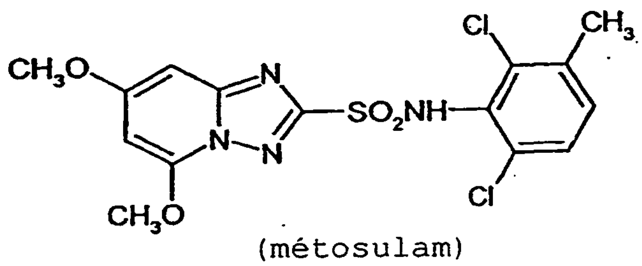

(II)

(métosulam)

et

C) N-phosphonométhylglycine de formule

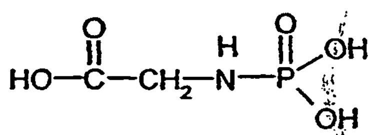

(III)

(glyphosate)

ou leurs sels,
ainsi que par une teneur en diluants et/ou en agents tensioactifs.

**2.** Composition suivant la revendication 1, **caractérisée en ce que**, dans la combinaison de substances actives, la substance active de formule (I) est dans un rapport en poids compris entre 1:0,01 et 1:0,2 avec la substance active de formule (II) et compris entre 1:0,5 et 1:10 avec la substance active de formule (III).

**3.** Procédé pour combattre des mauvaises herbes, **caractérisé en ce qu'**on épand des combinaisons de substances actives suivant la revendication 1 sur les mauvaises herbes et/ou sur leur milieu.

**4.** Utilisation de combinaisons de substances actives suivant la revendication 1 pour combattre des mauvaises herbes.

**5.** Procédé de préparation de compositions herbicides, **caractérisé en ce qu'**on mélange des combinaisons de substances actives suivant la revendication 1 avec des diluants et/ou des agents tensioactifs.